# EUROPÄISCHE PATENTANMELDUNG

(11) **EP 2 374 518 A1**
(43) Veröffentlichungstag der Anmeldung: **12.10.2011**
(21) Anmeldenummer: 11153671.0
(22) Anmeldetag: 08.02.2011
(51) Int. Cl.: B01D 29/01, F01L 1/34

(54) **Filterelement und Steuerventil für ein Nockenwellenverstellsystem**

(30) Priorität: 18.03.2010 DE 102010011834
(71) Anmelder: Schaeffler Technologies GmbH & Co. KG, 91074 Herzogenaurach (DE)
(72) Erfinder: Hoppe, Jens, 91056 Erlangen (DE); Konias, Stefan, 91054 Erlangen (DE)

(57) **Zusammenfassung**

Die Erfindung betrifft ein Filterelement (1, 21, 41, 61, 81, 101) für ein Steuerventil (121) eines Nockenwellenverstellers, umfassend ein Ringfiltergewebe (5, 25, 45, 65, 85, 105) zur Abscheidung von Partikeln, sowie einen Fesselungsrahmen (3, 23, 43, 63, 83, 103) zur Befestigung des Ringfiltergewebes (5, 25, 45, 65, 85, 105). Hierbei ist der Fesselungsrahmen (3, 23, 43, 63, 83, 103) zur flächigen Verspannung des Ringfiltergewebes (5, 25, 45, 65, 85, 105) am Steuerventil (121) ausgebildet. Weiterhin betrifft die Erfindung ein Steuerventil (121) für einen Nockenwellenversteller mit einem entsprechenden Filterelement (1, 21, 41, 61, 81, 101). Ein derartiges Filterelement (1, 21, 41, 61, 81, 101) weist gegenüber dem Stand der Technik eine verlängerte Lebensdauer auf.

## Beschreibung

### Gebiet der Erfindung

Die Erfindung betrifft ein Filterelement für ein Steuerventil eines Nockenwellenverstellers, umfassend ein Filtergewebe zur Abscheidung von Partikeln sowie einen Rahmen zur Befestigung des Filtergewebes. Weiterhin betrifft die Erfindung ein Steuerventil für einen Nockenwellenversteller mit einem vorgenannten Filterelement.

### Hintergrund der Erfindung

Ein Nockenwellenversteller dient der gezielten Verstellung der Phasenlage zwischen einer Nockenwelle und einer Kurbelwelle in einer Brennkraftmaschine und ermöglicht so die optimierte Einstellung der Ventilsteuerzeiten. Hierdurch kann beispielsweise die Leistung einer Brennkraftmaschine erhöht oder der Verbrauch gesenkt werden kann.

Ein Nockenwellenversteller hat einen drehfest mit der Kurbelwelle verbundenen Stator und einen in diesem Stator gehaltenen Rotor. Der Rotor ist wiederrum drehfest mit der Nockenwelle verbunden und kann gegenüber dem Stator verstellt werden. Die Verstellung des Rotors wird durch eine Beaufschlagung von im Stator ausgebildeten Druckkammern mit einer Hydraulikflüssigkeit wie Öl hervorgerufen. Die Beaufschlagung wird über eine mit der Druckseite des Ölversorgungssystems kommunizierende Druckleitung gewährleitstet. Das Öl wird dabei mittels einer Pumpe von einem Ölreservoir innerhalb des Motorölkreislaufs über die Druckleitung in die Druckkammern des Nockenwellenverstellers gepumpt und kann somit zur Verstellung der Nockenwelle genutzt werden.

Das Öl kann hierbei mit Partikel verschmutzt sein, die beispielsweise durch Abrieb an bewegten Bauteilen im Betrieb der Brennkraftmaschine entstehen. Das verunreinigte Öl kann über das Steuerventil bis in die Druckkammern des Nockenwellenverstellers transportiert werden und sich dort absetzen. Dies kann zu einer eingeschränkten Funktion bis hin zu einem Ausfall des Nockenwellenverstellers führen.

Um dies zu verhindern, werden Filterelemente eingesetzt, die Partikel vor dem Eintritt in das Steuerventil bzw. in die Druckkammern aus dem Öl abscheiden. Filterelemente bestehen üblicherweise aus einem innerhalb eines Rahmens gehaltenen Filtergewebe. Ein derartiges Filterelement ist aus der WO 2006/136258 A1 bekannt. Das Filterelement ist einstückig mit einem Filtergewebe und einen Rahmen ausgebildet und fest in einer Ringnut an einem Steuerventil positioniert. Das Filtergewebe ist während der Herstellung des Rahmens in diesen eingegossen. Mit anderen Worten sind das Filtergewebe und der Rahmen fest miteinander verbunden.

Nachteilig hierbei ist, dass bei einer Beschädigung des Rahmens auch das Filtergewebe beschädigt wird und so seine Filterwirkung verliert. Ein eingegossenes Filtergewebe stellt somit keine dauerhafte Lösung als Partikelfilter für ein Steuerventil dar.

### Aufgabe der Erfindung

Es ist demnach eine erste Aufgabe der Erfindung, ein Filterelement anzugeben, welches eine gegenüber dem Stand der Technik verlängerte Lebensdauer hat.

Eine zweite Aufgabe der Erfindung ist es, ein Steuerventil mit einem vorgenannten Filterelement anzugeben, wobei die Funktionsfähigkeit des Steuerventils und somit der störungsfreie Betrieb eines Nockenwellenverstellers länger gewährleistet ist.

### Lösung der Aufgabe

Die erste Aufgabe der Erfindung wird erfindungsgemäß gelöst durch ein Filterelement mit der Merkmalskombination gemäß Anspruch 1.

Demnach umfasst das Filterelement für ein Steuerventil eines Nockenwellenverstellers ein Ringfiltergewebe zur Abscheidung von Partikeln sowie einen Fesselungsrahmen zur Befestigung des Ringfiltergewebes. Hierbei ist vorgesehen, dass der Fesselungsrahmen zur flächigen Verspannung des Ringfiltergewebes am Steuerventil ausgebildet ist.

Die Erfindung berücksichtigt hierbei, dass bei einem einstückigen Filterelement durch die Beschädigung des Rahmens, zum Beispiel bei unsachgemäßer Befestigung an einem Steuerventil, das Filtergewebe zerstört werden kann. Die auf den Rahmen wirkenden Kräfte werden unmittelbar auf das Ringfiltergewebe übertragen, so dass bei einer Zerstörung des Rahmens auch die Filterfunktion des Filtergewebes nicht mehr gewährleistet werden kann.

Die Erfindung löst dieses Problem durch die Trennung der Haltefunktion des Rahmens von der Filterfunktion. Durch diese Trennung kann bei Krafteinwirkung auf den Rahmen eine direkte Übertragung dieser Kräfte auf das Filtergewebe verhindert werden, so dass die Filterwirkung aufrecht erhalten werden kann. Mit anderen Worten ist die Haltefunktion des Filterelementes an einem Steuerventil von der Filterfunktion bzw. der Reinigungsfunktion des Filterelementes entkoppelt. Der Halt des Filterelements kommt entgegen den bislang verwendeten Filterelementen durch die flächige Verspannung eines Ringfiltergewebes mittels des umspannenden Fesselungsrahmens an einem Steuerventil zustande.

Das Ringfiltergewebe kann gemeinsam mit dem Fesselungsrahmen auf einem Steuerventil angebracht werden. Dies kann beispielsweise gleichzeitig geschehen, wenn das Filtergewebe vor der Anbringung bereits in den Fesselungsrahmen eingelegt ist. Alternativ kann das Ringfiltergewebe auch men eingelegt ist. Alternativ kann das Ringfiltergewebe auch zuerst am Steuerventil positioniert und schließlich von dem Fesselungsrahmen umspannt werden.

Grundsätzlich sind verschiedene Möglichkeiten denkbar, die zur flächigen Verspannung des Ringfiltergewebes am Steuerventil führen. Der Fesselungsrahmen ist hierzu vorteilhafterweise im Wesentlichen ringförmig ausgebildet. Diese Ausgestaltung ist naheliegend, da es sich bei den Steuerventilen insbesondere um Steuerventile mit rohrförmigen Gehäusen handelt. Dementsprechend kann der Fesselungsrahmen unter Verspannung des Ringfilterelements genau auf dem Steuerventil positioniert werden. Wenn die Federvorspannung des Fesselungsrahmens hoch genug ist, um ein Abrutschen des Fesselungsrahmens von dem Steuerventil zu verhindern, kann beispielsweise auf eine zusätzliche Befestigung der Enden des Fesselungsrahmens verzichtet werden.

Um bei geringerer eigener Federvorspannung des Fesselungsrahmens eine ausreichende Verspannung zu erreichen, ist der Fesselungsrahmen bevorzugt mit zwei sich in Umfangsrichtung erstreckenden Enden ausgebildet, die auf unterschiedliche Weise miteinander verbunden werden können. Derart kann das Ringfiltergewebe durch den Fesselungsrahmen am Steuerventil gehalten und unter Verbindung der Enden verspannt werden.

In einer vorteilhaften Ausgestaltung der Erfindung ist der Fesselungsrahmen mit zwei sich in Umfangsrichtung erstreckenden Enden ausgebildet, die miteinander verhakbar sind. Eine verhakbare Verbindung kann beispielsweise durch zwei radial umgebogene Enden verwirklicht werden, wobei ein Ende radial nach außen gebogen ist und das zweite Ende radial nach innen. Die Enden können durch ein Zusammendrücken des Fesselungsrahmens miteinander in Kontakt gebracht werden und schließlich ineinander verhaken.

In einer bevorzugten Ausgestaltung der Erfindung sind die Enden des Fesselungsrahmens durch ein Befestigungsmittel miteinander verbindbar. Hierbei sind die Enden insbesondere beide radial nach außen gebogen, so dass die Enden über das Befestigungsmittel miteinander verbunden werden können. Das Befestigungsmittel kann hierzu beispielsweise als ein Drahtbügel ausgebildet sein, in welchem die umgebogenen Enden des Fesselungsrahmens jeweils verhaken. Diese Ausgestaltung bietet beispielsweise die Möglichkeit, die Verbindung der Enden des Fesselungsrahmens bei Bedarf zu lösen.

In einer weiter vorteilhaften Ausgestaltung der Erfindung ist der Fesselungsrahmen mit zwei sich in Umfangsrichtung erstreckenden Enden ausgebildet, die miteinander verstemmbar sind. Durch eine verstemmte Verbindung zwischen den Enden des Fesselungsrahmens wird eine kraft- und formschlüssige Verbindung durch plastische Verformung hergestellt. Die Verformung des Randbereiches zumindest eines der Teile erfolgt in einer Weise, dass sie die Enden insbesondere unlösbar ineinander verkeilen. Hierzu kann der Fesselungsrahmen besonders mit zwei Enden ausgebildet sein, die sich in Umfangsrichtung überlappen, so dass die Enden einfach miteinander verstemmt werden können. Zum Verstemmen eignen sich insbesondere Metalle.

Vorteilhafterweise ist der Fesselungsrahmen im Wesentlichen ringförmig mit zwei sich in Umfangsrichtung erstreckenden Enden ausgebildet, die miteinander verschweißbar sind. Die Enden des Fesselungsrahmens können so unter Anwendung von Wärme oder Druck unlösbar miteinander verbunden werden. Dabei werden sie beispielsweise bis zur Verflüssigung erhitzt und so verbunden.

Zweckmäßigerweise ist der Fesselungsrahmen als ein insbesondere metallischer Bügel mit einer Anzahl von über den Umfang des Bügels eingebrachten Öffnungen ausgebildet. Der Bügel bietet den notwendigen Halt und im Falle eines Metalls eine ausreichende Vorspannung zum Halten und flächigen Verspannen des Ringfiltergewebes auf einem Steuerventil. Ein metallischer Werkstoff liefert die nötige Elastizität des Fesselungsrahmens. Alternativ sind auch geeignete Kunststoffe vorstellbar. Insbesondere sind die Öffnungen an den Stellen im Fesselungsrahmen bzw. im Bügel eingebracht, wo das Filterelement mit den Öffnungen des Steuerventils überlappt. Somit kann das Öl ohne unnötigen Druckverlust durch das Filtergewebe strömen.

In einer weiter vorteilhaften Ausgestaltung der Erfindung ist der Fesselungsrahmen als ein metallisches Gitter ausgebildet ist, dessen Maschenweite gegenüber der Maschenweite des Ringfiltergewebes gröber ist. Mit anderen Worten wird das feinmaschige Gewebe von dem grobmaschigen Gewebe des Fesselungsrahmens gehalten. Der grobmaschige Fesselungsrahmen gewährleistet den sicheren Halt für das Ringfiltergewebe. Es ist grundsätzlich ebenfalls möglich, dass das grobmaschige Gitter und das feinmaschige Ringfiltergewebe derart miteinander verbunden sind. In diesem Fall dient das grobmaschige Gitter als Träger für das feinmaschige Ringfiltergewebe. Durch die Verbindung des Gitters mit dem Ringfiltergewebe können beide Teile vorzugsweise in einem Montageschritt gemeinsam auf einem Steuerventil angebracht werden.

Die zweite Aufgabe der Erfindung wird erfindungsgemäß gelöst durch ein Steuerventil mit der Merkmalskombination gemäß Anspruch 7.

Demnach umfasst das Steuerventil ein rohrförmiges Ventilgehäuse und einen in dem Ventilgehäuse angeordneten Steuerkolben, wobei das Ventilgehäuse mit einer radialen Durchführungsöffnung von Hydraulikflüssigkeit ausgebildet ist, sowie ein Filterelement nach einer der vorgenannten Ausgestaltungen. Das Ringfiltergewebe ist hierbei innerhalb des Fesselungsrahmens am Ventilgehäuse flächig verspannt.

Dementsprechend ist ein sicherer Halt des Ringfiltergewebes auf dem Steuerventil bzw. auf dem Ventilgehäuse gewährleistet. Die Haltefunktion des Filterelementes am Steuerventil ist hierbei von der Filterfunktion des Filterelementes entkoppelt.

Das Steuerventil dient, wie bereits eingangs erwähnt, der Dosierung des Öls zum Betrieb eines Nockenwellenverstellers. Das Steuerventil ist üblicherweise als ein elektromagnetisches Steuerventil ausgebildet, welches aus einem Elektromagneten mit einem elektrischen Steckkontakt und einem Kolben besteht, der in dem Ventilgehäuse aufgenommen ist. Der elektrische Steckkontakt kann insbesondere mit einem Steuermodul verbunden sein, über welches das Steuerventil geregelt wird. Mit Hilfe des Steuerventils kann die Zu- und Abfuhr des Öls zu und von den Druckkammern eines Nockenwellenverstellers eingestellt werden.

Bei Anliegen eines Stromes am Elektromagneten des Steuerventils verschiebt dieser den inneren Steuerkolben des Steuerventils und schaltet so den Öldruck zwischen den Druckkammern des Nockenwellenverstellers. Die jeweils nicht mit Öldruck beaufschlagte Druckkammer ist mit einem Anschluss für den Ölrücklauf verbunden, über den das Öl wieder dem Motorölkreislauf zugeführt werden kann. Zur Sicherstellung der Reinheit des Öls ist das Filterelement radial um die Durchführungsöffnung angeordnet, so dass das Öl, welches in das Steuerventil und damit in die Druckkammern des Nockenwellenverstellers gelangt, von Schmutzpartikeln gereinigt ist.

### Kurze Beschreibung der Zeichnung

Im Folgenden werden Ausführungsbeispiels der Erfindung anhand einer Zeichnung näher erläutert. Dabei zeigen:
- Fig.1: eine dreidimensionale Darstellung eines Filterelements mit einem verschweißten Fesselungsrahmen, sowie das Filterelement in einem Längsschnitt, und eine Detailansicht,
- Fig.2: eine dreidimensionale Darstellung und eine Detailansicht eines Filterelements mit einem verschweißten Fesselungsrahmen,
- Fig.3: eine dreidimensionale Darstellung und eine Detailansicht eines Filterelements mit einem verschweißten Fesselungsrahmen,
- Fig.4: eine dreidimensionale Darstellung und eine Detailansicht eines Filterelements mit einem verhakten Fesselungsrahmen,
- Fig.5: eine dreidimensionale Darstellung und eine Detailansicht eines Filterelements mit einem mittels eines Drahtbügels geschlossenen Fesselungsrahmen,
- Fig.6: eine dreidimensionale Darstellung eines Filterelements mit einem verstemmten Fesselungsrahmen, sowie
- Fig.7: ein Steuerventil mit drei verschiedenen Filterelementen.

### Ausführliche Beschreibung der Zeichnung

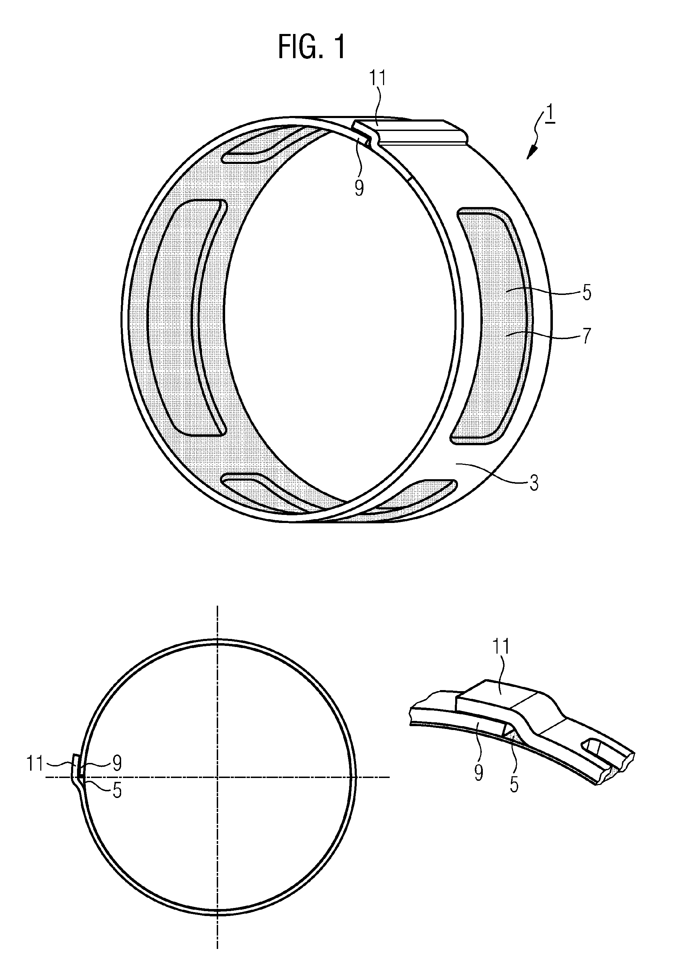

Die Fig. 1 bis 6 zeigen unterschiedliche Ausgestaltungen jeweils eines Filterelements mit einem Ringfiltergewebe zur Abscheidung von Partikeln sowie mit einem Fesselungsrahmen zur Befestigung des Ringfiltergewebes. Zusätzlich zeigen die Fig. 1, 2 und 4 bis 6 jeweils eine Detailansicht des jeweiligen Filterelements.

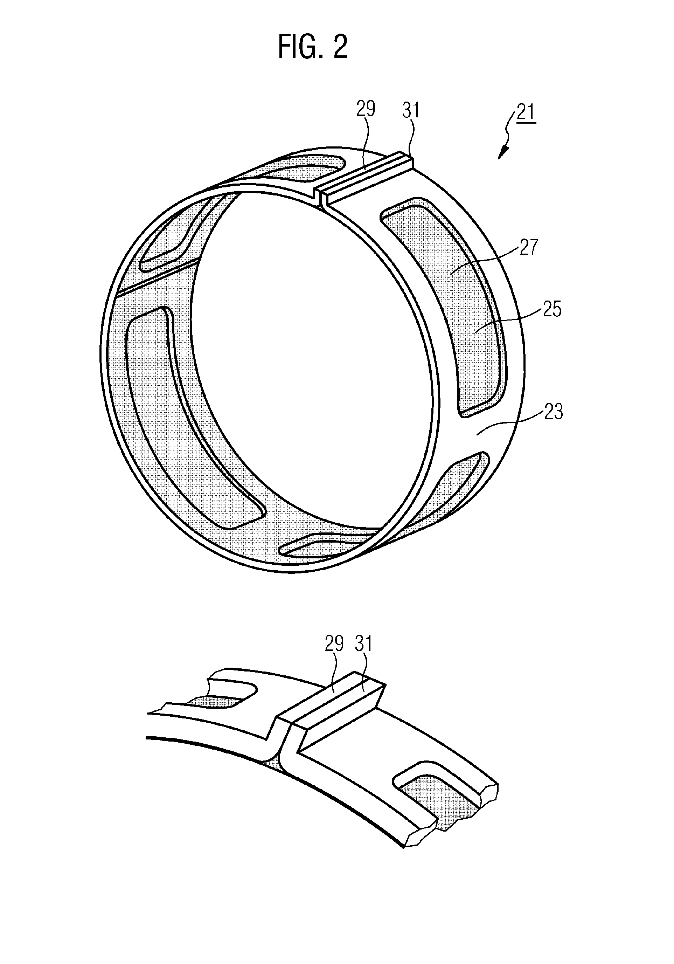

Die Fig. 1 bis 3 zeigen jeweils ein Filterelement 1, 21, 41 mit einem verschweißten Fesselungsrahmen 3, 23, 43. Die Fesselungsrahmen 3, 23 gemäß den Fig. 1 und 2 sind hierbei als Metallbügel mit Öffnungen 5, 25 ausgebildet. In den Fesselungsrahmen 3, 23 ist jeweils ein feinmaschiges Ringfiltergewebe 7, 27 zur Filterung der Schmutzpartikel gehalten.

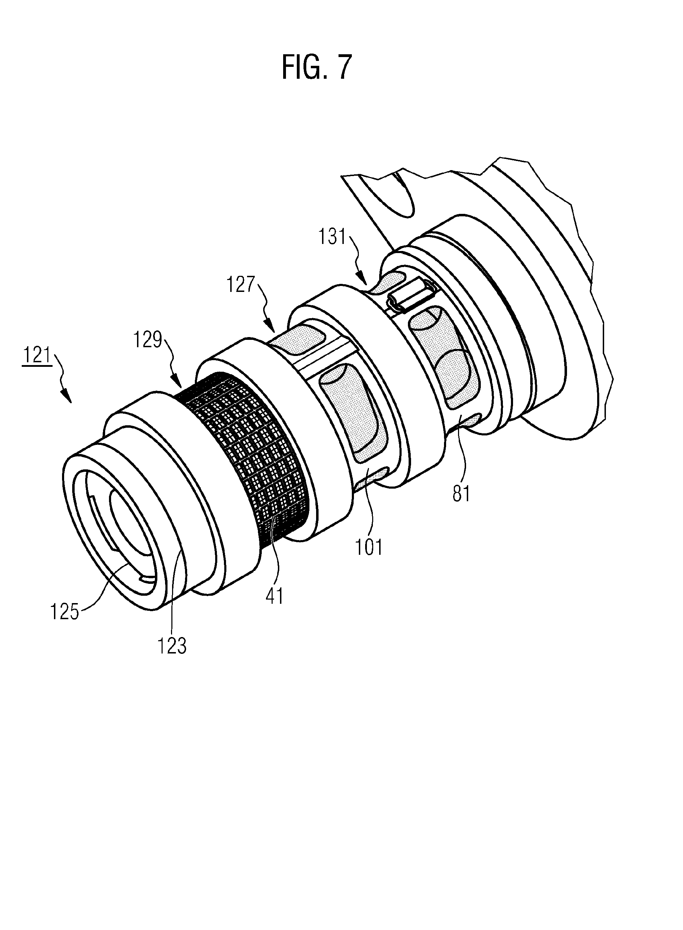

Der Fesselungsrahmen 3 aus Fig. 1 ist hierbei mit zwei Enden 9, 11 ausgebildet, die sich in Umfangsrichtung überlappen. Dies ist besonders im Längsschnitt sowie in der Detailansicht gut zu erkennen. Die Vorspannung des Fesselungsrahmens 3 ist über den Überlapp eingestellt und groß genug, dass der Fesselungsrahmen 3 auf einem Steuerventil, wie in Fig. 7 gezeigt, sicher hält.

Der Fesselungsrahmen 23 aus Fig. 2 ist mit zwei Enden 29, 31 ausgebildet, die sich nach außen hin erstrecken. Die Enden 29, 31 sind ebenfalls mittels eines Schweißprozesses miteinander verbunden. Hier weist der Fesselungsrahmen 23 an sich einen gegenüber dem Steuerventil verringerten Durchmesser auf, so dass sich nach dem Verschweißen die Haltefunktion ergibt.

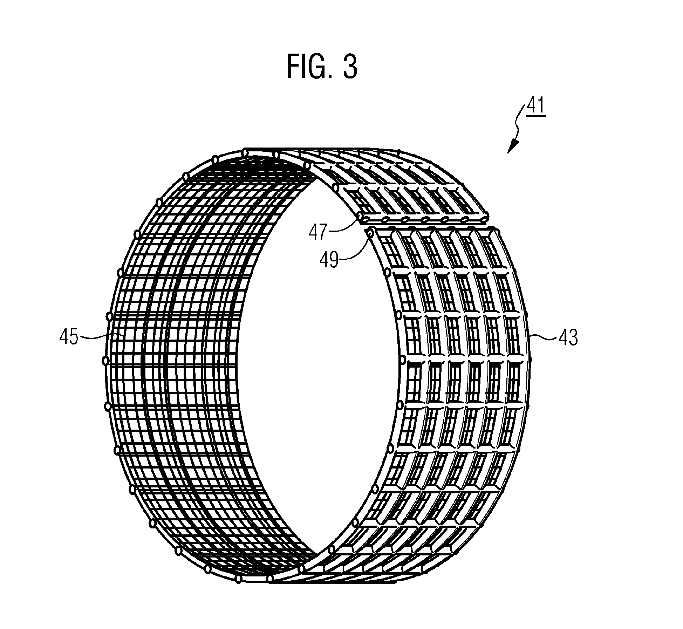

In Fig. 3 ist eine verschweißte Grobgewebefesselung eines Ringfiltergewebes 45 mittels eines Fesselungsrahmens 43 gezeigt. Der Fesselungsrahmen 43 ist als ein metallisches Grobgewebe ausgebildet, dessen Maschenweite größer ist als die Maschenweite des innerhalb des Fesselungsrahmens 43 angebrachten, sehr feinmaschigen Ringfiltergewebes 45. Der Fesselungsrahmen 43 ist mit dem Ringfiltergewebes 45 verbunden und erfüllt somit eine Trägerfunktion für das Ringfiltergewebe 45. Durch die Verbindung der beiden Teile können der Fesselungsrahmen 43 und das Ringfiltergewebes 45 in einem Montageschritt gemeinsam auf einem Steuerventil angebracht werden. Die jeweiligen Enden 47, 49 des Fesselungsrahmens 43 können nach der Anbringung auf einem Steuerventil wie bereits die Fesselungsrahmen 3, 23 durch Schweißen miteinander verbunden werden und somit das Ringfiltergewebe 45 flächig verspannen.

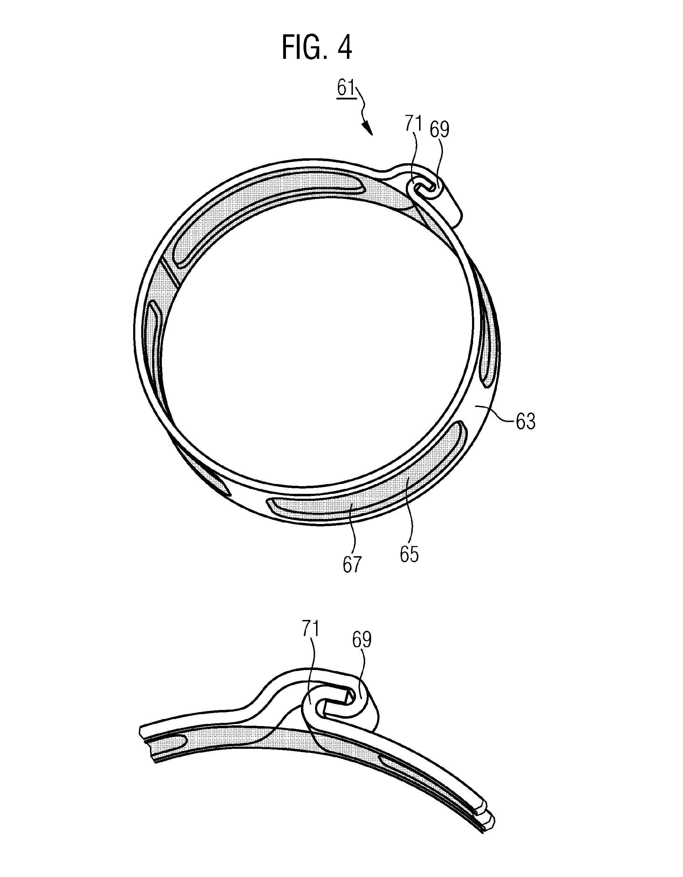

In Fig. 4 ist ein Filterelement 61 gezeigt, welches einen metallischen Fesselungsrahmen 63 und ein innerhalb dieses Fesselungsrahmens 63 angeordnetes feinmaschiges Ringfiltergewebe 65 aufweist. Der Fesselungsrahmen hat vier Öffnungen 67, durch die Öl über eine nicht gezeigte Zuleitung in ein Steuerventil gelangen kann. Der Fesselungsrahmen 63 hat zwei sich in Umfangsrichtung erstreckende Enden 69, 71 die miteinander verhakt sind. Hierzu ist das eine Ende 69 radial nach innen abgebogen und das Ende 71 radial nach außen gebogen. Durch die Spannung des Fesselungsrahmens 63 können sich die Enden im montierten Zustand des Bügels nicht voneinander lösen.

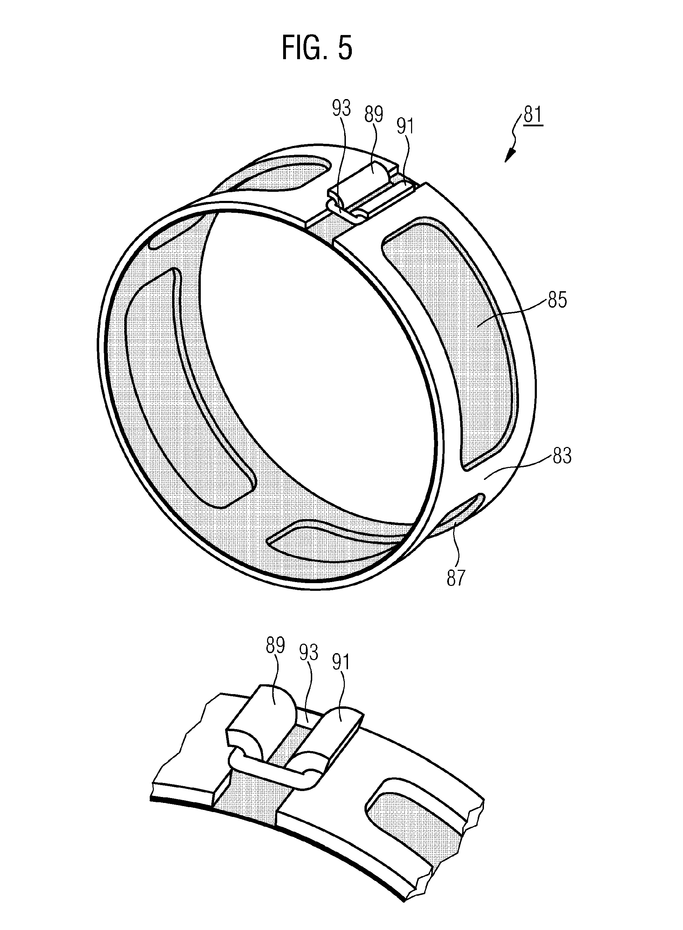

Fig. 5 zeigt eine weitere Befestigungsmöglichkeit eines Filterelements 81. Wie auch in Fig. 4 besteht das Filterelement 81 aus einem Fesselungsrahmen 83 und einem feinmaschigen Ringfiltergewebe 85. Der Fesselungsrahmen 83 hat ebenfalls Öffnungen 87 und zwei sich in Umfangsrichtung erstreckende Enden 89, 91. Im Unterschied zu Fig. 4 sind die Enden 89, 91 des Fesselungsrahmens 81 beide radial nach außen gebogen und über ein als Drahtbügel 93 ausgebildetes Befestigungsmittel aneinander befestigt. Der Drahtbügel 93 umschließt die umgebogenen Enden 89, 91 des Fesselungsrahmens und hält sie so fest zusammen. Dadurch ergibt sich die Vorspannung des Fesselungsrahmens 83. Wie auch in Fig. 4 ist die Verbindung der Enden 89, 91 bei Entfernen des Drahtbügels 93 lösbar.

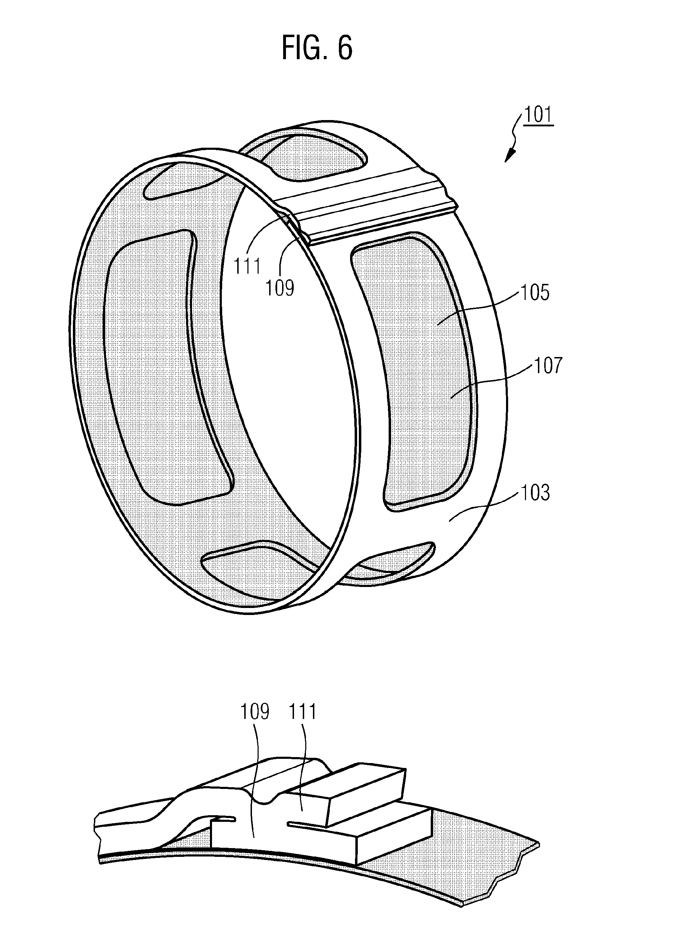

In Fig. 6 ist ein Filterelement 101 mit einem metallischer Fesselungsrahmen 103 und einem feinmaschigen Ringfiltergewebe 105 gezeigt. Der Fesselungsrahmen 103 hat Öffnungen 107, durch die das Ringfiltergewebe 105 der Filterung der Partikel aus dem Öl zur Verfügung steht. Die beiden Enden 109, 111 des Fesselungsrahmens 103 überlappen in Umfangsrichtung und sind durch plastische Verformung unter Vorspannung des Fesselungsrahmens 103 miteinander verstemmt.

In Fig. 7 ist ein Steuerventil 121 für einen Nockenwellenversteller gezeigt. Das Steuerventil 121 hat ein rohrförmiges Ventilgehäuse 123 und ein innerhalb einer Ventilöffnung 125 positionierten Kolben, der aufgrund der Darstellung nicht zu sehen ist. Das Steuerventil 121 ist als Proportionalventil ausgeführt, welches in Verbindung zu Ölpumpe und Rücklauf, sowie zu den beiden Druckkammern des Nockenwellenverstellers steht.

Das Steuerventil 121 weist eine radiale Durchführungsöffnung 127 zur Ölzufuhr und zwei weitere Anschlüsse 129, 131 zur Verbindung mit den Druckkammern eines Nockenwellenverstellers auf. Die Anschlüsse 129, 131 und die Durchführungsöffnung 127 sind als Bohrungen in das Ventilgehäuse 125 eingebracht. Die Anschlüsse 129, 131 dienen jeweils der Beaufschlagung einer separaten Druckkammer.

Über die Durchführungsöffnung 127 und die beiden jeweils benachbarten Anschlüsse 129, 131 sind in Fig. 7 Filterelemente 41, 81, 101 gemäß der Ausführungsbeispiele der Fig. 3, 5 und 6 angeordnet. Die drei unterschiedlichen Filterelemente 41, 81, 101 sind hier nur zur Veranschaulichung an einem Steuerventil 121 angeordnet. In der Praxis wird für ein Steuerventil 121 jeweils nur eine Ausführungsform eines Filterelements 1, 21, 41, 61, 81, 101 verwendet werden.

Jedes der drei in Fig. 7 gezeigten Filterelemente 41, 81, 101 ist radial um das Steuerventil angeordnet. Das Filterelement 101, dessen Enden 109, 111 miteinander verstemmt sind, ist radial um die Durchführungsöffnung 127 angeordnet. Um den Anschluss 129 ist ein Filterelement 41 angeordnet, dessen Enden 47, 49 miteinander verschweißt sind. Der Anschluss 131 wird radial vom Filterelement 81 umfasst, dessen Enden 89, 91 durch den Drahtbügel 93 miteinander verbunden.

Die Fesselungsrahmen 43, 83, 103 aller drei auf dem Steuerventil 121 positionierten Filterelemente 41, 81, 101 verspannen jeweils ein auf ihrem Innenumfang angeordnetes Ringfiltergewebe 45, 85, 105 am Ventilgehäuse 123.

**Liste der Bezugszahlen**
- 1: Filterelement
- 3: Fesselungsrahmen
- 5: Ringfiltergewebe
- 7: Öffnung
- 9: Ende
- 11: Ende
- 21: Filterelement
- 23: Fesselungsrahmen
- 25: Ringfiltergewebe
- 27: Öffnung
- 29: Ende
- 31: Ende
- 41: Filterelement
- 43: Fesselungsrahmen
- 45: Ringfiltergewebe
- 47: Ende
- 49: Ende
- 61: Filterelement
- 63: Fesselungsrahmen
- 65: Ringfiltergewebe
- 67: Öffnung
- 69: Ende
- 71: Ende
- 81: Filterelement
- 83: Fesselungsrahmen
- 85: Ringfiltergewebe
- 87: Öffnung
- 89: Ende
- 91: Ende
- 101: Filterelement
- 103: Fesselungsrahmen
- 105: Ringfiltergewebe
- 107: Öffnung
- 109: Ende
- 111: Ende
- 121: Steuerventil
- 123: Ventilgehäuse
- 125: Öffnung
- 127: Durchführungsöffnung
- 129: Anschluss
- 131: Anschluss

## Patentansprüche

1. Filterelement (1, 21, 41, 61, 81, 101) für ein Steuerventil (121) eines Nockenwellenverstellers, umfassend ein Filtergewebe zur Abscheidung von Partikeln, sowie einen Halterahmen zur Befestigung des Filtergewebes, **dadurch gekennzeichnet, dass** das Filtergewebe ein Ringfiltergewebe (5, 25, 45, 65, 85, 105) ist, und dass der Halterahmen als ein Fesselungsrahmen (3, 23, 43, 63, 83, 103) zur flächigen Verspannung des Ringfiltergewebes (5, 25, 45, 65, 85, 105) am Steuerventil (121) ausgebildet ist.

2. Filterelement (1, 21, 41, 61, 81, 101) nach Anspruch 1, **dadurch gekennzeichnet, dass** der Fesselungsrahmen (3, 23, 43, 63, 83, 103) im Wesentlichen ringförmig mit zwei sich in Umfangsrichtung erstreckenden Enden (9, 11, 29, 31, 47, 49, 69, 71, 89, 91, 109, 111) ausgebildet ist, die miteinander verhakbar sind.

3. Filterelement (1, 21, 41, 61, 81, 101) nach Anspruch 1, **dadurch gekennzeichnet, dass** der Fesselungsrahmen (3, 23, 43, 63, 83, 103) im Wesentlichen ringförmig mit zwei sich in Umfangsrichtung erstreckenden Enden (9, 11, 29, 31, 47, 49, 69, 71, 89, 91, 109, 111) ausgebildet ist, die durch ein Befestigungsmittel (93) miteinander verbindbar sind.

4. Filterelement (1, 21, 41, 61, 81, 101) nach Anspruch 1, **dadurch gekennzeichnet, dass** der Fesselungsrahmen (3, 23, 43, 63, 83, 103) im Wesentlichen ringförmig mit zwei sich in Umfangsrichtung erstreckenden Enden (9, 11, 29, 31, 47, 49, 69, 71, 89, 91, 109, 111) ausgebildet ist, die miteinander verstemmbar sind.

5. Filterelement (1, 21, 41, 61, 81, 101) nach Anspruch 1, **dadurch gekennzeichnet, dass** der Fesselungsrahmen (3, 23, 43, 63, 83, 103) im Wesentlichen ringförmig mit zwei sich in Umfangsrichtung erstreckenden Enden (9, 11, 29, 31, 47, 49, 69, 71, 89, 91, 109, 111) ausgebildet ist, die miteinander verschweißbar sind.

6. Filterelement (1, 21, 41, 61, 81, 101) nach einem der vorhergehenden Ansprüche, **dadurch gekennzeichnet, dass** der Fesselungsrahmen (3, 23, 43, 63, 83, 103) als ein insbesondere metallischer Bügel mit einer Anzahl von über den Umfang des Bügels eingebrachten Öffnungen (7, 27, 67, 87, 107) ausgebildet ist.

7. Filterelement (1, 21, 41, 61, 81, 101) nach einem der vorhergehenden Ansprüche, **dadurch gekennzeichnet, dass** der Fesselungsrahmen (3, 23, 43, 63, 83, 103) als ein metallisches Gitter ausgebildet ist, dessen Maschenweite gegenüber der Maschenweite des Ringfiltergewebes (5, 25, 45, 65, 85, 105) gröber ist.

8. Steuerventil (121) für einen Nockenwellenversteller, umfassend ein rohrförmiges Ventilgehäuse (123) und einen in dem Ventilgehäuse (123) angeordneten Steuerkolben, wobei das Ventilgehäuse (123) mit einer radialen Durchführungsöffnung (127) von Hydraulikflüssigkeit ausgebildet ist, sowie ein Filterelement (1, 21, 41, 61, 81, 101) nach einem der Ansprüche 1 bis 7, wobei das Ringfiltergewebe (5, 25, 45, 65, 85, 105) innerhalb des Fesselungsrahmens (3, 23, 43, 63, 83, 103) am Ventilgehäuse (123) flächig verspannt ist.
